## Europäisches Patentamt
## European Patent Office
## Office européen des brevets

(11) Veröffentlichungsnummer: **0 067 334**
**A1**

# (12) EUROPÄISCHE PATENTANMELDUNG

(21) Anmeldenummer: **82104634.9**

(22) Anmeldetag: **27.05.82**

(51) Int. Cl.³: **F 16 K 5/06**

(30) Priorität: **12.06.81 DE 3123286**

(43) Veröffentlichungstag der Anmeldung:
**22.12.82 Patentblatt 82/51**

(84) Benannte Vertragsstaaten:
**AT BE CH DE FR GB IT LI LU NL SE**

(71) Anmelder: **Klein, Schanzlin & Becker Aktiengesellschaft**
**Johann-Klein-Strasse 9**
**D-6710 Frankenthal(DE)**

(72) Erfinder: **Illy, Alois**
**Heidelberger Strasse 5**
**D-6703 Limburgerhof(DE)**

(74) Vertreter: **Furkert, Diethelm**
**Klein, Schanzlin & Becker Aktiengesellschaft**
**Johann-Klein-Strasse 9**
**D-6710 Frankenthal(DE)**

(54) **Kugelhahn mit einteiligem Gehäuse.**

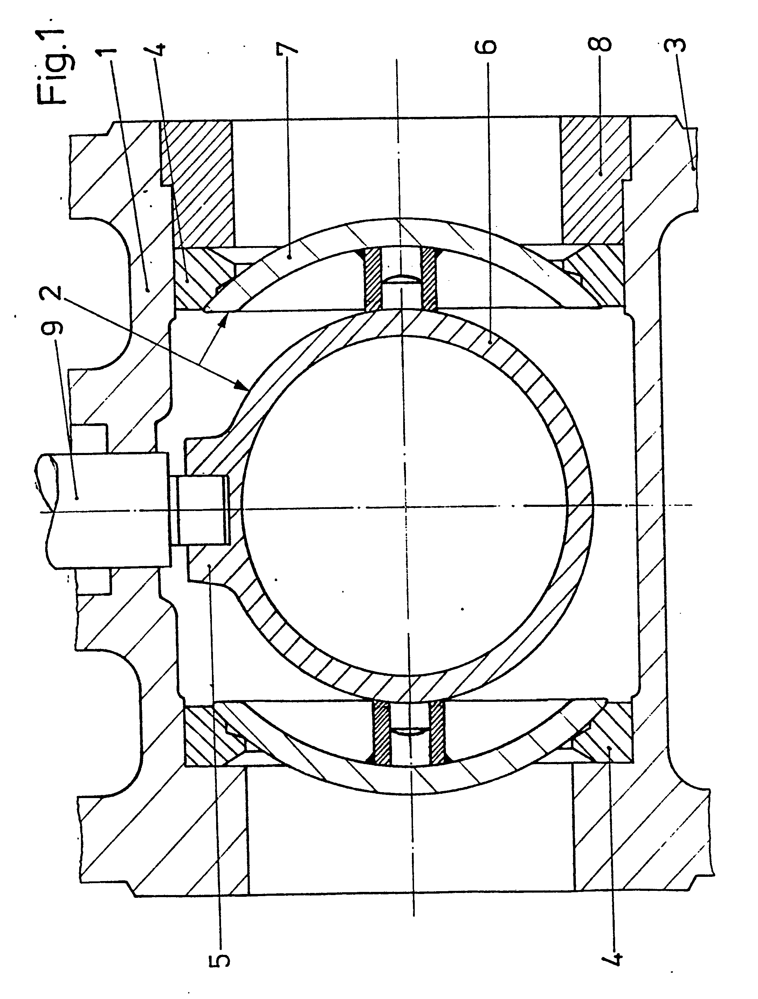

(57) Die Erfindung betrifft einen Kugelhahn, dessen Kugelküken (2) mehrteilig ausgebildet ist und innerhalb eines einteiligen Gehäuses (1) montier- bzw. demontierbar ist. Die einzelnen Teile des Kugelkükens (2) befinden sich bezüglich ihrer Abmessungen innerhalb einer Hüllkontur, die kleiner ist als der Durchmesser der Gehäuseöffnungen für die anzuschließenden Rohrleitungen (Fig. 1).

Fig.1

Klein, Schanzlin & Becker Aktiengesellschaft

Kugelhahn mit einteiligem Gehäuse

Die Erfindung betrifft einen Kugelhahn gemäß dem Oberbegriff des Anspruches 1.

Eine dem Oberbegriff entsprechende Ausführungsform ist durch die DE-AS 12 35 085 bekannt. Hierbei wird die Kugel sowie deren Dichtelemente durch eine Gehäuseöffnung eingebracht, die später durch die Rohrleitungsanschlüsse verschlossen wird. Die Nennweite der Rohrleitungsanschlüsse und der Durchströmbohrung sind hier gleich groß. Bei größer werdenden Nennweiten ergeben sich jedoch die folgenden Probleme. Für den Fall, daß der Durchflußquerschnitt innerhalb des Kugelhahnes gleich dem Durchflußquerschnitt der Rohrleitung ist, wird bei größeren Nennweiten der Kugeldurchmesser unverhältnismäßig größer und erfordert eine Teilung des Gehäuses. Falls eine Teilung des Gehäuses nicht erwünscht wird, bleibt nur die Möglichkeit, eine starke Einschnürung des Durchflußquerschnittes des Kugelkükens zuzulassen. Somit kann der Durchmesser der Kugel kleingehalten werden, jedoch bedingt dies einen hohen Druckverlust innerhalb des Kugelhahnes.

Eine Zwischenlösung, die für die Montage ein mehrteiliges Gehäuse vorsieht, welches nach der Montage zugeschweißt wird, ist insofern eine bedingt brauchbare Lösung, als hierbei eine Demontage der Innenteile nicht mehr möglich ist.

Aus der FR-PS 13 16 183 ist eine weitere Lösung bekannt, bei der innerhalb eines einteiligen Gehäuses zwei einschiebbare Kugelhälften montiert werden. Da hierbei jedoch die beiden Kugelhälften durch eine Schweißverbindung zusammengehalten werden, ist eine nachträglich Demontage der Innenteile nicht möglich.

Der Erfindung liegt die Aufgabe zugrunde, für Kugelhähne mit Nennweiten von ca. 50 mm und größer sowie einteiligem Gehäuse eine Konstruktion zu entwickeln, bei der die Innenteile ohne Zerstörung des Gehäuses jederzeit ausbaubar sind. Die Lösung dieser Aufgabe sieht vor, daß in eine zylinderförmig abgedrehte Kugel ein ein- oder mehrteiliges Strömungsführungsrohr einschiebbar ist. Durch die zylinderförmige Abdrehung der Kugel kann selbige ohne Schwierigkeit durch die Gehäuseöffnung in das Gehäuseinnere eingebracht werden. Nach Drehung der abgedrehten Kugel um 90° ist es möglich, das Strömungsführungsrohr in die Kugel einzuschieben und erreicht somit wieder eine vollständige Führung der Strömung in dem Gehäuseinneren. Das fertig zusammengesteckte Kugelküken kann sowohl schwimmend in den Dichtringen gelagert werden, es ist aber auch ohne weiteres möglich, das Kugelküken in Zapfen zu lagern. Dies gilt für alle Ausführungsformen.

Weiterhin ist eine andere Lösung der Erfindung möglich, nach der in ein Strömungsführungsrohr mit einer rechtwinklig dazu verlaufenden Bohrung eine zylindrisch abgedrehte Kugel mit einer rechtwinklig zu deren Zylinderachse verlaufenden Durchflußbohrung einschiebbar ist. Je nach den Einsatzgebieten bzw. den Anwendung findenden Nennweiten kann diese Ausführungsform herstellungstechnische Vorteile beinhalten.

Eine Ausgestaltung der Erfindung sieht vor, daß rechtwinklig zur Achse eines Strömungsführungsrohres Dichtplatten fest oder beweglich anbringbar sind. Der bei der erfindungsgemäßen Ausführung nachteilig erscheinende größere Montageaufwand wird um ein Vielfaches aufgewogen durch die konstruktiven Vorteile, die die neue Lösung bietet.

Eine andere Ausgestaltung der Erfindung sieht vor, daß an einem Tragkörper Dichtplatten fest oder beweglich anbringbar sind und daß in den Tragkörper ein ein- oder mehrteiliges Strömungsführungsrohr einschiebbar ist. Das Strömungsführungsrohr dient zur besseren Durchströmung des Kugelhahnes und vermindert die Turbulenzen innerhalb des Gehäuses. Weiterhin bietet es die Möglichkeit, den für die Drehbewegung des Kugelkükens notwendigen Raum vor Verunreinigungen bzw. Ablagerungen zu schützen.

Eine weitere Ausführungsform der Erfindung sieht vor, daß zwischen miteinander durch Stege verbundene Dichtplatten oder kugelförmige Flächen ein Strömungsführungsrohr einschiebbar ist. Die durch Stege verbundenen Dichtplatten oder kugelförmigen Flächen können aus einem Stück oder auch aus mehreren Einzelteilen hergestellt werden. Es ist ohne weiteres möglich, diese Teile im Blechprägeverfahren herstellen zu lassen und zwischen den die Abdichtung sicherstellenden Dichtplatten ein Strömungsführungsrohr einzuführen.

Grundsätzlich ist es nicht erforderlich, die einzelnen Teile des Kugelkükens unlösbar miteinander zu verbinden. Allenfalls aus Gründen der Montageerleichterung bzw. aufgrund von Betriebsbedingungen (Vibrationen) können auftrennbare Heftschweißungen, Schraubverbindungen oder andere formschlüssige Verbindungen bei den mehrteiligen Kugelküken Anwendung finden.

In den Zeichnungen sind Ausführungsbeispiele der Erfindung dargestellt und werden im folgenden näher beschrieben. Es zeigen die

Fig. 1    ein einteiliges Strömungsführungsrohr mit aufgesteckten beweglichen Dichtplatten, die

Fig. 2a    einen Kugelhahn in Geschlossenstellung mit Tragkörper und eingeschobenem Strömungsführungsrohr, die

Fig. 2b    die Ausführung der Fig. 2a in Offenstellung, die

Fig. 3    ein mehrteiliges Kugelküken in schematischer Darstellung, wobei durch eine zylindrisch abgedrehte Kugel ein Strömungsführungsrohr durchgesteckt ist, die

Fig. 4    in schematischer Darstellung ein Strömungsführungsrohr, durch welches eine zylindrisch abgedrehte Kugel durchgesteckt ist, die

Fig. 5    in schematischer Darstellung eine zylindrisch abgedrehte Kugel, in die ein Strömungsführungsrohr bis zu einem definierten Anschlag eingeschobe n ist und die

Fig. 6    in schematischer Darstellung sowie in der Draufsicht ein mehrteiliges Kugelküken, bei dem die Dichtplatten durch Stege verbunden sind.

Die Fig. 1 zeigt einen Kugelhahn mit einteiligem Gehäuse 1. Hierin ist ein mehrteiliges Kugelküken 2 eingebaut. Bei der Montage wird hier von der Seite des Flansches 3 der Dichtring 4 in das Gehäuse 1 eingelegt. Das mit einem Mitnehmer 5 versehene Strömungsführungsrohr 6 wird zuerst in das Gehäuse 1 eingeführt. Durch wechselweise $90^{\circ}$-Drehungen werden nacheinander die beiden kugeligen Dichtplatten 7 mit dem Strömungsführungsrohr 6 verbunden. In dem Ausführungsbeispiel ist es eine lose Steckverbindung. Es sind natürlich auch andere Verbindungsmöglichkeiten gegeben. Durch einen zweiten Dichtring 4, welcher an dem fertig montierten Kugelküken 2 anliegt und sich an einem Ring 8 abstützt, wird der Zusammenhalt des Kugelkükens 2 sichergestellt. Die Drehbewegung erfolgt über eine Betätigungseinrichtung 9, die mit dem Mitnehmer 5 in Verbindung steht.

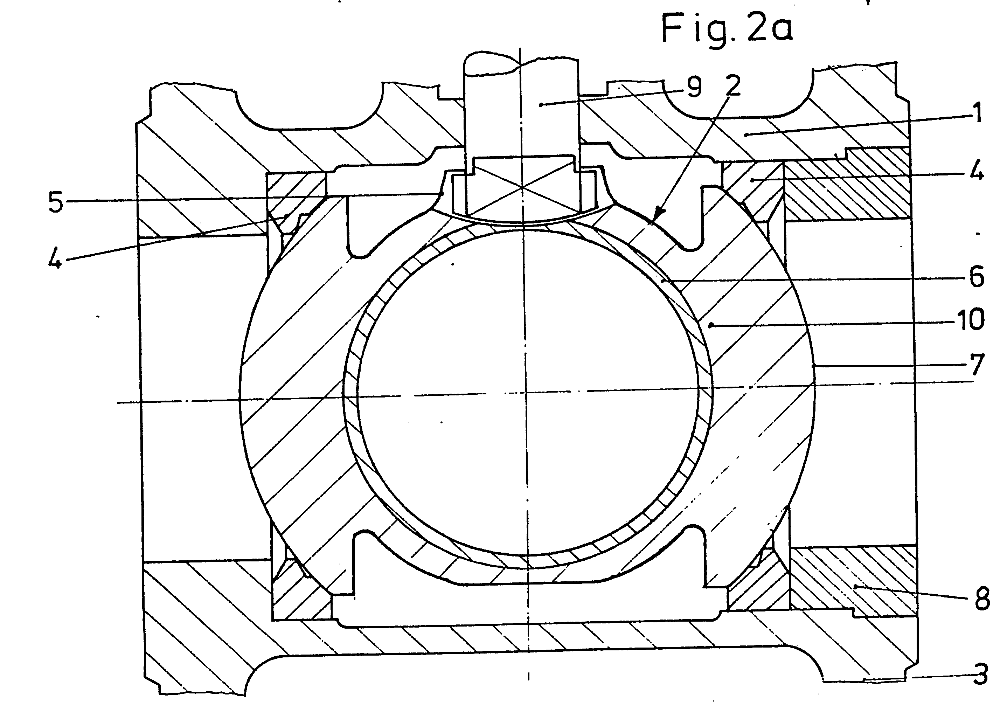

Die Fig. 2a zeigt ein Kugelküken 2, welches aus einem Tragkörper 10 besteht, der mit dem Mitnehmer 5 und den Dichtplatten 7 einstückig ausgebildet ist. Bei der Montage wird der Tragkörper 10 in das Gehäuse eingeführt, um $90^{\circ}$ gedreht und anschließend das Strömungsführungsrohr 6 durchgesteckt. Die innerhalb des Gehäuses erfolgende Fixierung des Kugelkükens 2 erfolgt wieder durch die Dichtringe 4 sowie den Ring 8. Der Mitnehmer 5 ist in diesem Ausführungsbeispiel in den Tragkörper 10 integriert.

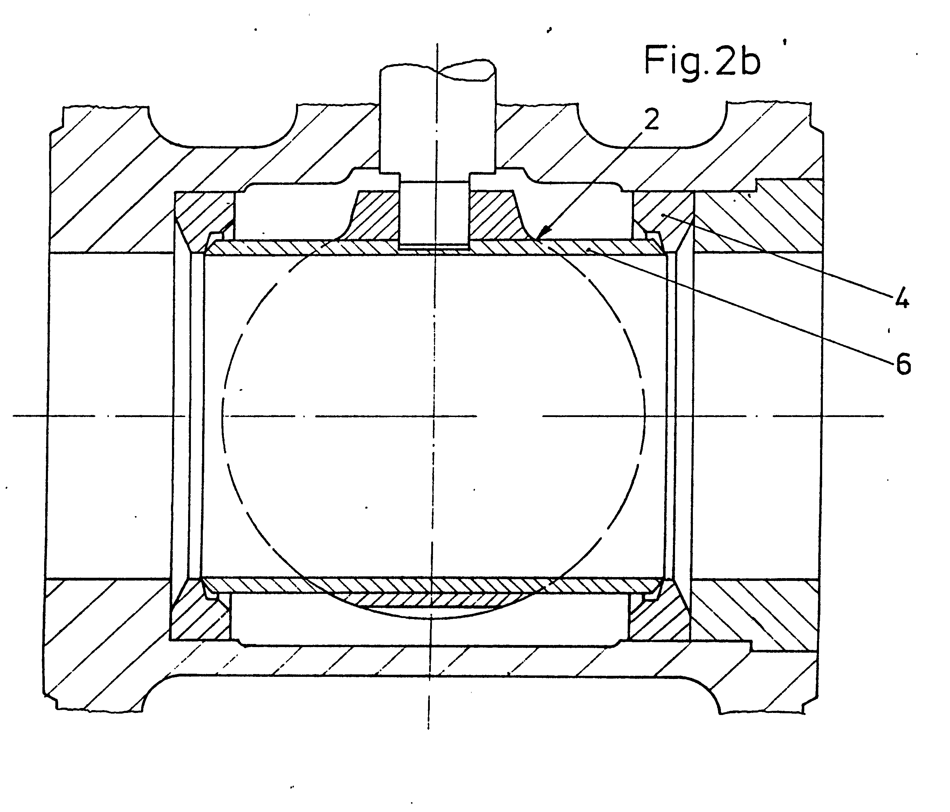

Die Fig. 2b zeigt in Offenstellung den gleichen Kugelhahn wie in Fig. 2 a. Es ist erkennbar, wie hier das Strömungsführungsrohr 6 an den Dichtringen 4 anliegt und somit eine glatte Durchströmung des Kugelhahnes ermöglicht.

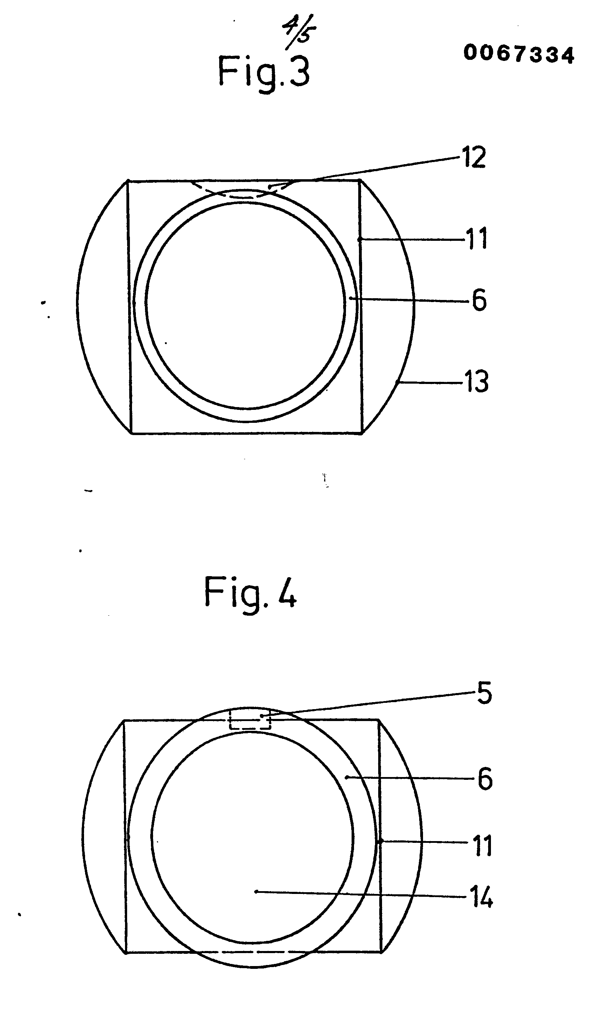

In den folgenden Fig. 3 bis 6 sind schematische Darstellungen des Kugelkükens gezeigt. In der Fig. 3 ist eine zylindrisch abgedrehte Kugel 11 abgebildet, welche rechtwinklig zur Zylinderfläche durchbohrt wurde und wobei die Bohrung das Strömungsführungsrohr 6 aufnimmt. Der Mitnehmer 5 wird hier durch eine Ausfräsung 12 gebildet. Die Abdichtung erfolgt mittels der die Dichtplatten bildenden Kugelflächen 13.

In der Fig. 4 ist ein Strömungsführungsrohr 6 dargestellt, durch das eine zylindrisch abgedrehte Kugel 11 durchgesteckt wurde, wobei die Kugel selbst eine Durchflußbohrung 14 aufweist.

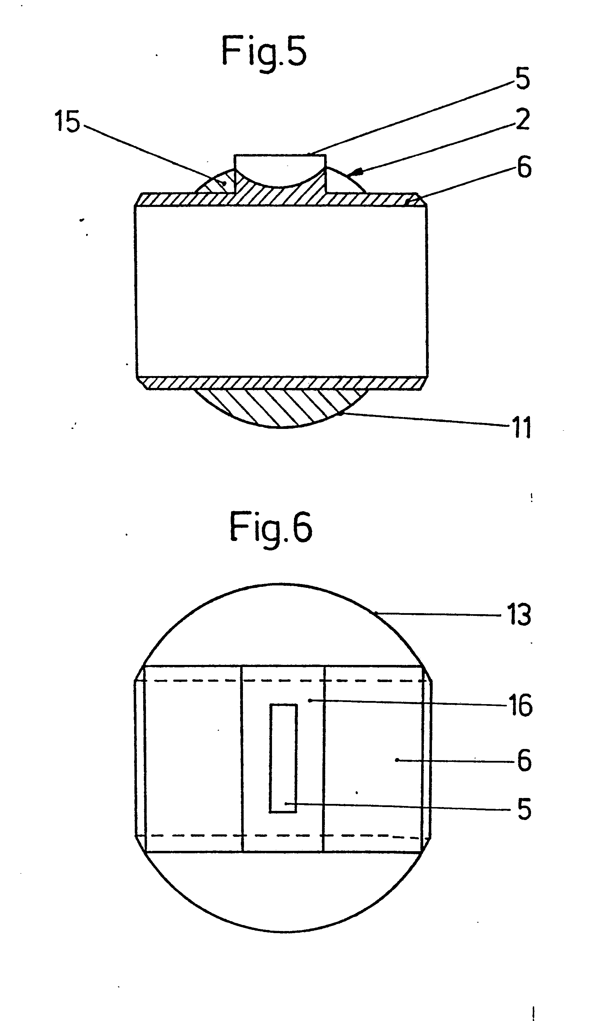

Die Fig. 5 zeigt ein Kugelküken 2, bei dem das mit dem Mitnehmer 5 versehene Strömungsführungsrohr 6 gegen einen Anschlag 15 der Kugel 11 läuft. Dies dient zur genauen Positionierung von Kugel und Strömungsführungsrohr 6.

Die Fig. 6 zeigt in der Draufsicht die Kugelflächen 13, welche auf die unterschiedlichste Art und Weise hergestellt sein können. Die Flächen selbst sind durch Stege 16 untereinander verbunden. Gleichzeitig bilden die Stege 16 die Aufnahme für das dazwischen gelagerte Strömungsführungsrohr 6. Weiterhin ist in die Stege 16 der Mitnehmer 5 integriert.

Durch die Aufteilung des Kugelkükens in mehrere Teile ist es möglich, diese nacheinander in ein einteiliges Gehäuse einzubringen und dort zu montieren. Aus dieser Maßnahme resultiert ein leichteres und stabileres Gehäuse, wobei keinerlei Dichtungsprobleme nach außen mehr auftreten. Wesentlicher ist aber der Vorteil, das nunmehr die bei großen Nennweiten bisher zwangsläufig notwendige starke Einschnürung der Durchflußbohrung nahezu wegfällt. Allenfalls bei sehr großen Nennweiten könnte eine Verringerung des Durchflußquerschnittes um ca. 10% stattfinden. Die Kugelküken selbst können sowohl in Zapfen als auch in den Dichtringen gelagert werden.

Klein,  Schanzlin  &  Becker  Aktiengesellschaft


Patentansprüche


1. Kugelhahn, bestehend aus einem Gehäuse mit darin angeordnetem Kugelküken, wobei dessen Durchflußbohrung senkrecht auf der Drehachse steht und das Kugelküken sowie Dichtringe und Positionierelemente durch die für die Rohrleitungsanschlüsse vorgesehenen Gehäuseöffnungen in das Gehäuse einführbar sind, das Kugelküken mehrteilig ausgebildet ist und dessen einzelne Teile eine Hüllkontur aufweisen, die kleiner als die Gehäuseöffnung ist, das Kugelküken innerhalb des Gehäuses zusammensetzbar ist und innerhalb des Gehäuses durch einen Mitnehmer mit einer Betätigungseinrichtung verbindbar ist, dadurch gekennzeichnet, daß in eine zylinderförmig abgedrehte Kugel (11) ein ein- oder mehrteiliges Strömungsführungsrohr (6) einschiebbar ist.


2. Kugelhahn nach dem Oberbegriff des Anspruches 1, dadurch gekennzeichnet, daß in ein Strömungsführungsrohr (6) mit einer rechtwinklig dazu verlaufenden Bohrung eine zylindrisch abgedrehte Kugel (11) mit einer rechtwinklig zu deren Zylinderachse verlaufenden Durchflußbohrung (14) einschiebbar ist.


3. Kugelhahn nach den Ansprüchen 1 und 2, dadurch gekennzeichnet, daß rechtwinklig zur Achse eines Strömungsführungsrohres (6) Dichtplatten (7, 13) fest oder beweglich anbringbar sind.

4. Kugelhahn nach den Ansprüchen 1 und 2, dadurch gekennzeichnet, daß an einem Tragkörper (10) Dichtplatten (7, 13) fest oder beweglich anbringbar sind und daß in den Tragkörper (10) ein ein- oder mehrteiliges Strömungsführungsrohr (6) einschiebbar ist.

5. Kugelbahn nach den Ansprüchen 1 und 2, dadurch gekennzeichnet, daß zwischen miteinander durch Stege (16) verbundene Dichtplatten oder kugelförmige Flächen (7, 13) ein Strömungsführungsrohr (6) einschiebbar ist.

Fig.1

0067334

Fig. 2a

Fig.2b

4/5

Fig.3

0067334

Fig.4

# Fig.5

15  5  2  6  11

# Fig.6

13  16  6  5

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A1 - 2 624 766 (KAMYR VALVES INC., GLENS FALLS, N.Y.)<br>* Seite 7; Absatz 2; Fig. 2a-2c * | 1,2 |
| A | DE - B - 1 122 788 (OTTO MEYER)<br>* Spalte 7, Zeilen 11-39; Fig. 1-4 * | 1-4 |
| A | AT - B - 256 572 (ING. O. MEYER)<br>* Seite 5, Zeilen 21-33; Fig. 1-3 * | 1-4 |
| A | GB - A - 406 660 (R. ALLEN)<br>* Gesamt * | 1 |
| A | DE - B - 2 326 694 (J.H. SCHAFER)<br>* Gesamt * | 1,3,4 |

----

**KLASSIFIKATION DER ANMELDUNG (Int. Cl.³)**

F 16 K 5/06

**RECHERCHIERTE SACHGEBIETE (Int. Cl.³)**

F 16 K 5/00
F 16 K 11/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| WIEN | 18-10-1982 | ROUSSARIAN |

EPA form 1503.1  06.78